# EUROPÄISCHE PATENTSCHRIFT

(11) **EP 0 511 198 B1**
(45) Veröffentlichungstag und Bekanntmachung des Hinweises auf die Patenterteilung: **21.12.1994**
(21) Anmeldenummer: 92890096.8
(22) Anmeldetag: 16.04.1992
(51) Int. Cl.: B61D 7/30, F16K 31/00

(54) **Einrichtung und Steuerung eines oder mehrerer elektrisch betätigbarer Magnetventile**
Device and control of one or several electrically actuated magnetic valves
Dispositif et contrôle d'une ou plusieurs valves magnétiques commandés par électricité

(30) Priorität: 26.04.1991 AT 876/91
(43) Veröffentlichungstag der Anmeldung: 28.10.1992
(73) Patentinhaber: Tiefenbach GmbH, 45257 Essen (DE)
(72) Erfinder: Frauscher, Josef, A-4774 St. Marienkirchen 46 (AT)
(74) Vertreter: Pfingsten, Dieter, Dipl.-Ing.

(56) Entgegenhaltungen:
- DE-A- 2 051 179
- US-A- 4 249 565

## Beschreibung

Die Erfindung betrifft eine Einrichtung nach dem Oberbegriff des Patentanspruches 1.

Es ist eine Reihe von autarken Systemen bekannt, auf denen hydraulische oder pneumatische Energie zur Verfügung steht. Bei Eisenbahnwaggons, die z.B. zum Transport von Schüttgut dienen, kann hydraulische Energie etwa durch Radsatzpumpen erzeugt oder pneumatische Energie über kuppeibare Schlauchleitungen vom Triebfahrzeug her übertragen werden. Diese Energie wird etwa für Bremszwecke oder zum Betätigen von Entladeklappen benützt. Diese Aktlonen werden vorteilhaft über Einrichtungen der eingangs genannten Art gesteuert. Bisher werden zur Heranführung der elektrischen Energie kuppelbare Versorgungsleitungen für die Magnetventile oder auch Batterien oder Akkumulatoren vorgesehen. Die Ansteuerung kann nach den Prinzipien der Fernsteuerung über Sender und zugeordnete Empfanger erfolgen. Bei solchen Systemen bestehen hohe Sicherheitsanforderungen, um z.B. das Öffnen von Entladeklappen zur Unzeit zu verhindern, so daß die Reichweite der Fernsteuereinrichtungen senderseitig begrenzt oder besondere Codierungen vorgenommen werden müssen, damit z.B. ein Waggon tatsächlich nur in einer bestimmten Entladestation entladen wird. Ferner muß auch die Eigenversorgung mit zusätzlichen Sicherheitsmaßnahmen versehen werden, um ein unerwünschtes Ansprechen der Magnetventile auch beim Auftreten von Fremdspannungen, z.B. bei Blitzschlag, zu verhindern, und es ergibt sich empfängerseitig für die Energieversorgung ein erhöhter Kosten- und Wartungsaufwand.

Es ist eine Einrichtung bekannt, die ohne Eigenversorgung der Magnetventile im autarken System mit elektrischer Energie das Auslangen findet. Hier wird durch ein gleichgerichtetes Magnetfeld etwa an der Entladestation ein etwa senkrecht auf einem im Ventil angeordneten längsgepolter Permanentmagnet, der in seiner Mitte kippbar lagert, beeinflußt, so daß er je nach der Polung des anliegenden Magnetfeldes auf die eine oder andere Seite kippt und über Gestänge oder Hebel das Ventil betätigt. Das Magnetfeld wird vorzugsweise durch einen fest montierten Gleichstrommagneten erzeugt, dessen Polung entsprechend wählbar ist. Abgesehen von der Beschränkung der Anzahl der übertragbaren Informationen auf höchstens zwei erfordert diese Einrichtung voluminöse, leistungsfähige Elektromagnete, die möglichst nahe an das Ventil bzw. den Stabmagneten heranreichen müssen, um eine sichere Schaltung zu erreichen, was für den Eisenbahnbetrieb bedeutet, daß der mit den entsprechenden Magnetventilen ausgestattete Waggon äußerst genau auf die meist ortsfesten Elektromagnete einrangiert werden muß. Bei einer Variante dieses Systems nach der DE-C 24 00 917 wird dadurch mit Magneten, auch Dauermagneten geringerer Feldstärke das Auslangen gefunden, daß zwar eine eigene Energieversorgung der Magnetventile über von der Lokomotive zu den Einzelwaggons führende Versorgungs- und Steuerleitungen vorgesehen wird, im Steuerkreis jedes Ventiles aber berührungslos von den Magneten betätigbare Steuerschalter, z.B. Herkon-Relais oder Reed-Relais, angeordnet werden, die nur im Wirkungsbereich des Magneten schließen und damit eine Ansteuerung der Ventile über die Steuerleitungen zulassen.

Aufgabe der Erfindung ist es, eine wirtschaftliche, betriebssichere, weitreichende und dabei mit verschiedenen Informationen ausstattbare Einrichtung zur berührungslosen Ansteuerung von Magnetventilen zu schaffen.

Diese Aufgabe wird erfindungsgemäß durch die Merkmale des Patentanspruches 1 gelöst.

Dabei wird der Geber vorzugsweise mit einer durch einen Oszillator mit Wechselstrom gespeisten Sendespule ausgestattet. Die Energieversorgung des oder der Magnetventile erfolgt vom Geber aus, so daß die Magnetventile auch nur bei einer ausreichenden Koppelung von Sender und Empfänger betätigt werden können und Fehlbetätigungen praktisch ausgeschlossen sind.

Eine vorteilhafte Ausgestaltung ist im Patentanspruch 2 angegeben.

Wenn nur ein Magnetventil oder mehrere Magnetventile grundsätzlich gleichzeitig zu betätigen sind, kann mit einer äußerst einfachen Codierung bzw. Modulierung für die Steuersignale gearbeitet werden. Bei höheren Sicherheitsanforderungen und dann, wenn mehrere Magnetventile selektiv betätigt werden müssen, kann man verschiedene an sich bekannte Arten der Signalmodulierung bzw. -codierung für die gezielte Übertragung von Befehlen wählen. Es kann für die Ansteuerung verschiedener Ventile selektiv nach der Modulationsfrequenz unterschieden werden. Ferner sind auch binäre Codierungen in Form einer Modulation der Trägerwechselspannung nach Rechteckimpulsen oder auch in Form einer Codierung mit Codeworten, bei denen der Code durch unterschiedliche Zeitabstände oder Längen der Signal- und Pausenzeiten gegeben ist, eingesetzt werden. Da solche Arten der Fernsteuerung an sich bekannt sind, wird hier nicht näher auf sie eingegangen.

Die bei der erfindungsgemäßen Einrichtung übertragbare elektrische Leistung muß in der Lage sein, mindestens einen Elektromagneten mindestens eines anzusteuernden Ventiles zu erregen und gleichzeitig den Eigenverbrauch des Empfängers zu decken. Die übertragbare Leistung ist nach den physikalischen Grundgesetzen eine Funktion der Sendeleistung, der Sendefrequenz und des Abstandes zwischen Sender und Empfänger. Vorteilhaft verwendet man hier leistungsarme Magnetventile und arbeitet mit relativ hohen Sendefrequenzen, um die Größe der Sende- und Empfangseinrichtung und auch die notwendige Sendeleistung in erträglichen Grenzen zu halten. Aus diesen Gründen wird man auch, wenn es die Anlage zuläßt, möglichst vorsehen, daß beim Vorhandensein mehrerer Ventile diese nacheinander und nicht gleichzeitig betätigt werden.

Eine vorteilhafte Weiterbildung des Erfindungsgegenstandes ist im Anspruch 3 angegeben. Dies hat den Vorteil, daß hier die für die Ventilbetätigung benötigte Energie über einen im Vergleich zur Betätigungszeit langen Zeitraum übertragen werden kann, so daß wieder Sender und Empfänger baulich kleiner und leistungsarm gebaut werden können. Dabei kann eine Weiterbildung nach Anspruch 4 vorgesehen sein, bei der vorteilhaft in der Weise gearbeitet wird, daß vor der Abgabe eines Steuerbefehles vom Sender dieser eine bestimmte Zeitspanne lang mit der ummodulierten Sendefrequenz betrieben wird, so daß der Kondensator aufgeladen wird. Wenn die Energie im Kondensator gespeichert ist, ist der Empfänger für die Durchführung von Steuerbefehlen bereit. Der gleiche Effekt wird erzielt, wenn senderseitig mit einer Mehrfachwiederholung einer Steuersequenz gearbeitet wird. Die Verwendung eines Kondensators ist auch dann besonders vorteilhaft, wenn für die Steuerung sorgenannte Impulsventile oder Rastventile eingesetzt werden, die nur kurze Schaltimpulse benötigen. Im übrigen kann man den Entladestrom des Kondensators in bekannter Weise durch Zuschaltung von Widerständen bzw. Auslegung des Gesamtarbeitswiderstandes begrenzen.

Eine besonders einfache und dabei wirksame Art der Steuerung ist im Anspruch 5 angegeben. Hier kann man geberseitig jedem Ventil eine Steuertaste zuordnen, die bei ihrer Betätigung die Modulation des Sendesignales mit der Kennfrequenz steuert und empfängerseitig werden keine aufwendigeren Decodierschaltungen, sondern einfache Frequenzwächter benötigt.

Eine Weiterbildung der erfindungsgemäßen Einrichtung, die insbesondere für das Eisenbahnwesen interessant erscheint, kennzeichnet der Anspruch 6.

In Entladestationen könnte es vorkommen, daß der Sender an der einen Waggonseite vorgesehen ist, der Empfänger für die zu betätigenden Magnetventile aber an der anderen Seite des Waggons liegt. Man kann nun an beiden Waggonseiten Empfänger anbringen, so daß in jedem Fall die Signal- und Befehlsübertragung auch bei nicht richtungsgleich aufgestellten Waggons gewährleistet ist. Es ist auch möglich, über die Waggonlänge verteilt sowie gegebenenfalls auch hier an jeder Waggonseite je zwei oder mehrere Empfänger anzuordnen. Hier kann in Entladestationen mit niedrigerer Rangiergenauigkeit gearbeitet werden. Ferner besteht die Möglichkeit, beim Einlauf eines Waggons in die Entladestation bereits über den oder die dabei am Sender vorbeibewegten Empfänger den Pufferkondensator aufzuladen, so daß beim Erreichen der gewünschten Entladestellung des Waggons sein Empfänger sofort für die Durchführung von Steuerbefehlen bereit ist.

Die Einrangiergenauigkeit kann bei der Ausführung nach Anspruch 7 verringert werden.

Wo die Möglichkeit besteht, empfiehlt sich die Anordnung gemäß Anspruch 8, da hier eine Unabhängigkeit von der Entladeseite erzielt wird.

Wenn eine Ausführung der Einrichtung gemäß Anspruch 9 gewählt wird, besteht die Möglichkeit, individuell in dem Speicher des einem Waggon zugeordneten Mikroprozessors spezifische Steuerprogramme für die Ventilbetätigung zu speichern und diese Steuerprogramme nur durch die Ansteuerung über die Auswahleinrichtung des Gebers abzurufen. Dabei kann bei der Übertragung der Signale zunächst der Mikroprozessor aktiviert und versorgt werden, der dann überprüft, ob die einlangenden Steuersignale für die Ansteuerung eines gespeicherten Befehlsprogrammes geeignet sind und im zutreffenden Fall die Aufladung des Kondensators sowie in weiterer Folge die Durchführung des jeweiligen Steuerprogrammes freigibt.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: ein Blockschaltschema einer erfindungsgemäßen Einrichtung, die aus Geber, Empfänger und an den Empfänger angeschlossener Auswerte- und Steuereinheit besteht,
- Fig. 2: eine Ausführungsvariante der Auswerteeinheit und
- Fig. 3: ebenfalls eine Ausführungsvariante der Auswerteeinheit.

Die Einrichtung besitzt einen vorzugsweise ortsfest anzubringenden Geber 1 und eine vorzugsweise an einem ortsbeweglichen und gegenüber dem Geber ausrichtbaren Objekt, z.B. einem Waggon, befindliche Empfangseinheit aus einem Empfänger 2 und einer Auswerteeinheit 3 mit Steuerungsteil für ein oder mehrere Magnetventile 4, 4a, 4b.

Der Geber 1 besitzt einen HF-Oszillator 5, der über Leitungen 6 an einem Energieversorgungsnetz liegt und überdies einen Modulationseingang 7 besitzt, über den die hochfrequente Wechselspannung in ihrer Amplitude moduliert werden kann, wobei beim Ausführungsbeispiel vorgesehen ist, daß bei Anordnung mehrerer Ventile und zugeordneter Betätigunsmagnete 4 - 4b eine entsprechende Anzahl von Modulationsfrequenzen auswählbar zur Verfügung steht. Bei anderen Anlagen könnte der Eingang 7 ein Codiereingang zur binären oder Codewort-Codierung des Sendesignales sein, wobei dann der Empfänger 2 eine entsprechende Decodierstufe enthalten müßte. Der Oszillator 5 ist mit einer Sendespule 8 verbunden, die dementsprechend ein hochfrequentes moduliertes Wechselfeld erzeugt.

Der Empfänger 2 enthält eine Empfängerspule 9, die in einem gegebenen Bereich von Sender 1 und Empfänger 2 ausreichend mit der Sendespule 8 induktiv gekoppelt ist, um eine Leistungs- und Befehlsübertragung zu ermöglichen. Die von der Empfängerspule 9 empfangene Spannung wird an eine zugleich als Demodulationsstufe dienende Gleichrichterschaltung 10 angelegt, von der der eine Pol direkt mit den Erregerwicklungen der Magnete 4 - 4b verbunden ist, wogegen der andere Pol mit einer über die Auswertungsstufe 3 führenden Leitung in Verbindung steht. In der Auswertungsstufe 3 ist jedem Magnetventil 4 - 4b ein frequenzselektiver Baustein 11, 11a, 11b zugeordnet, der seinerseits über einen Schaltverstärker 12, 12a, 12b mit den Magnetwicklungen

4 - 4b verbunden ist. Wird der Oszillator 5 über den Eingang 7 mit einer zugeordneten Steuerfrequenz moduliert, so gibt der zugeordnete frequenzselektive Baustien 11 - 11b ein Steuersignal an den zugehörigen Schaltverstärker 12 - 12b und das zugeordnete Magnetventil 4 - 4b wird betätigt.

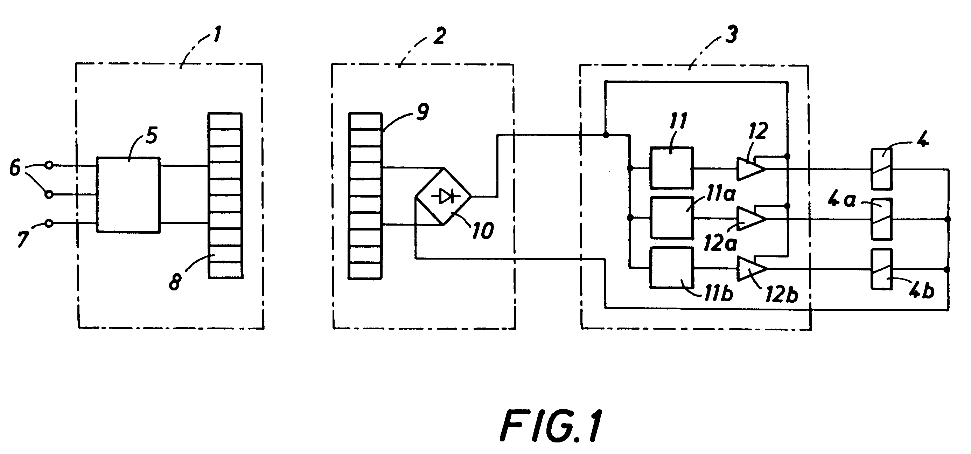

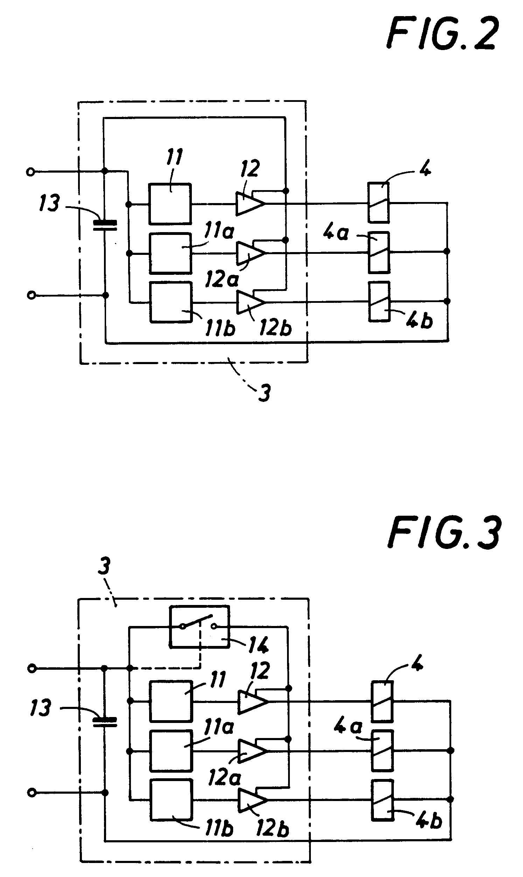

Die Ausführung nach Fig. 2 unterscheidet sich von der Konstruktion nach Fig. 1 nur dadurch, daß zwischen die beiden Eingangsleitungen der Auswertungsstufe 3 ein Pufferkondensator 13 geschaltet ist, der von der Gleichrichterschaltung 10 her beim Empfang eines Sendesignales aufgeladen wird und der sich beim Einschalten eines Magnetventiles 4 - 4b über die Erregerwicklung dieses Magnetventiles entlädt bzw. abhängig von der Einschaltdauer des Magneten und die durch den Kreiswiderstand gegebene Entladungszeitkonstante teilentlädt.

In Fig. 3 ist die Schaltung nach Fig. 2 noch durch einen im Steuerkreis der Magnetventile 4 - 4b liegenden spannungsempfindlichen Schalter 14 ergänzt, der erst schließt, wenn über einen Spannungswächter festgestellt wird, daß der Kondensator 13 einen bestimmten Mindestaufladezustand erreicht hat, so daß eine Ventilbetätigung bzw. -ansteuerung erst möglich ist, wenn die für diese Betätigung notwendige Schaltenergie im Kondensator 13 gespeichert ist.

## Patentansprüche

1. Einrichtung zur Steuerung eines oder mehrerer über einen Steuerstromkreis (3) elektrisch betätigbarer Magnetventile (4 - 4b) eines autarken, ortsbeweglichen Objektes von einem mechanisch und galvanisch von diesem System getrennten, ortsfesten, dem möglichen Verstellweg des Objektes zugeordneten und mit dem System in einem vorbestimmten Bereich koppelbaren Geber (1) aus, insbesondere zur Fernbetätigung von Magnetventilen auf mit hydraulischen oder pneumatischen Energieversorgungseinrichtungen ausgestatteten Waggons in Entladestationen u.dgl. von wenigstens einem der Entladestation ortsfest zugeordneten Geber aus, dadurch gekennzeichnet, daß der Geber (1) als sowohl für die Energie- als auch Steuerbefehlsübertragung dienender Sender (5) ausgebildet ist und mit einem im Steuerstromkreis (3) des oder der Magnetventile (4 - 4b) liegenden Empfänger (2) sowohl für die ausschließliche elektrische Energieversorgung des Steuerstromkreises und der Magnetventile als auch zur Steuerbefehlsübertragung in wenigstens einer relativen Zuordnungsstellung induktiv (8, 9) kuppelbar ist.

2. Einrichtung nach Anspruch 1, dadurch gekennzeichnet, daß der Geber (1) zur Eingabe von Steuerbefehlen eine Codier- oder Modulationseinrichtung (7) für den Sender (5) und der Empfänger (2) eine gegebenenfalls in eine Gleichrichterstufe (10) integrierte Decodier- oder Demodulationsstufe aufweist, und daß die Gleichrichterstufe (10) an den Versorgungskreis angeschlossen und die Decodier- bzw. Demodulationsstufe Teil einer Ansteuereinrichtung (11, 12) für das Magnetventil bzw. die selektive Ansteuerung mehrerer Magnetventile (4 - 4b) ist.

3. Einrichtung nach Anspruch 1 oder 2, dadurch gekennzeichnet, daß im Versorgungskreis des Empfängers (2, 3) wenigstens ein durch das Sendesignal aufladbarer und bei der Ansteuerung eines Magnetventiles (4 - 4b) über dessen Erregerwicklung entladbarer Pufferkondensator (13) angeordnet ist.

4. Einrichtung nach Anspruch 3, dadurch gekennzeichnet, daß im Steuerkreis für den Pufferkondensator (13) eine Überwachungsschaltung (14) vorgesehen ist, die eine Ansteuerung von Ventilen (4 - 4b) im Sinne einer Ventilbetätigung erst ab einem vorgegebenen Mindestaufladezustand des Kondensators zuläßt.

5. Einrichtung nach einem der Ansprüche 1 - 4, dadurch gekennzeichnet, daß für die selektive Ansteuerung mehrerer Magnetventile (4 - 4b) jedem Ventil senderseitig eine vorgegebene Modulationsfrequenz für das Sendesignal, die sich von den Modulationsfrequenzen für andere Ventile unterscheidet, zugeordnet und empfängerseitig für jedes Ventil ein frequenzselektiver Baustein (11 - 11b) vorgesehen ist, der beim Auftreten dieser Modulationsfrequenz nur das zugeordnete Ventil im Betätigungssinn ansteuert.

6. Einrichtung nach einem der Ansprüche 1 - 5, dadurch gekennzeichnet, daß insbesondere bei Anordnung der Magnetventile (4 - 4b) auf einem ortsbeweglichen Objekt, z.B. einem Waggon, und ortsfester Anordnung des Gebers (1) am ortsbeweglichen Objekt mehrere mit dem Geber induktiv koppelbare Empfänger (2) angebracht und im Steuerkreis für die Ventile parallelgeschaltet sind.

7. Einrichtung nach einem der Ansprüche 1 - 6, dadurch gekennzeichnet, daß mehrere parallel geschaltete Geber im Verstellweg des Objektes hintereinander, vorzugsweise auf einer gemeinsamen Leiste angeordnet und parallel geschaltet sind.

8. Einrichtung nach einem der Ansprüche 1 - 7, dadurch gekennzeichnet, daß bei der Ausbildung des ortsbeweglichen Objektes als Waggon der Geber (1) oder die Gebergruppe zwischen den Schienen des Geleises nach oben und der Empfänger oder die Empfängergruppe an der Waggonunterseite nach unten weisend angebracht sind.

9. Einrichtung nach einem der Ansprüche 1 - 8, dadurch gekennzeichnet, daß der Empfänger einen programmierbaren, die Magnetventile steuernden Mikroprozessor aufweist, dessen Steuerprogramme über unterschiedliche Modulationsfrequenzen des Gebers (1) auswählbar sind.

## Claims

1. Device for controlling one or several magnetic valves (4 - 4b) electrically actuatable by means of a control circuit (3) of a self-sufficient, travelling object, from a fixed transmitter (1) separated mechanically and electrically from said system, associated to the possible setting range of the object and which is coupled with the system in a predetermined area, particularly for the remote actuation of magnetic valves, on waggons fitted with hydraulic or pneumatic energy supply devices in unloading stations and the like, by at least one transmitter allocated to the unloading station in a fixed manner, characterized in that the transmitter (1) is constructed as a transmitter (5) used both for the transmission of energy and also for command transmission and which is coupled inductively in at least one relative allocated position (8, 9) with a receiver (2) lying in the control circuit (3) of the magnetic valve or valves (4 - 4b) for both the exclusive electric energy supply of the control circuit and the magnetic valves and for transmitting control commands.

2. Device according to claim 1, characterized in that the transmitter (1), for the input of control commands, comprises a coding or modulation device (7) for the transmitter (5) and the receiver (2) comprises a decoding or demodulation stage optionally integrated into a rectifier stage (10) and in that the rectifier stage (10) is connected to the supply circuit and the decoding or demodulation stage part is connected to a drive device (11, 12) for the magnetic valve or the selective driving of several magnetic valves (4 - 4b).

3. Device according to claim 1 or 2, characterized in that at least one buffer capacitor (13) chargeable by the transmitting signal and dischargeable during the drive of a magnetic valve (4 - 4b) by means of its exciter winding, is disposed in the supply circuit of the receiver (2, 3).

4. Device according to claim 3, characterized in that a monitoring switch (14) is provided in the control circuit for the buffer capacitor (13), which switch only permits a drive of the valves (4 - 4b) in the sense of a valve actuation, from a specified minimum charged state of the capacitor.

5. Device according to one of claims 1 - 4, characterized in that for the selective driving of several magnetic valves (4 - 4b) each valve on the transmitter side is allocated a specified modulation frequency for the transmitting signal, which frequency differs from the modulation frequencies for other valves and on the receiver side a frequency selective component (11 - 11b) is provided for each valve, which only drives and actuates the associated valve when this modulation frequency occurs.

6. Device according to one of claims 1 - 5, characterized in that particularly when arranging the magnetic valves (4 - 4b) on a travelling object, e.g. a waggon and arranging the transmitter (1) such that it is fixed at the travelling object, several receivers (2) which are inductively coupled with the transmitter, are fitted and are connected in parallel in the control circuit for the valves.

7. Device according to one of claims 1 - 6, characterized in that several transmitters connected in parallel in the setting range of the object are disposed behind one another, preferably on a common ledge and are connected in parallel.

8. Device according to one of claims 1 - 7, characterized in that when the travelling object is in the form of a waggon, the transmitter (1) or the transmitter group is fitted between the rails of the track pointing upwards and the receiver or the receiver group is fitted on the underside of the waggon pointing downwards.

9. Device according to one of claims 1 - 8, characterized in that the receiver comprises a programmable microprocessor which controls the magnetic valves, the control programmes of said microprocessor being selectable by means of different modulation frequencies of the transmitter (1).

## Revendications

1. Dispositif pour la commande d'une ou plusieurs valves magnétiques (4 - 4b) d'un objet mobile autonome qui sont actionnées électriquement par l'intermédiaire d'un circuit de courant de commande (3) à partir d'un transmetteur (1) fixe qui est mécaniquement et électriquement indépendant de ce système et peut être couplé à celui-ci dans une zone prédéterminée, notamment pour l'actionnement à distance dans des stations de déchargement ou analogues, à partir d'un transmetteur associé de manière fixe à ladite station de déchargement, de valves magnétiques sur des wagons équipés de dispositifs d'alimentation en énergie hydraulique ou pneumatique, caractérisé par le fait que le transmetteur (1) est agencé sous forme d'émetteur (5) aussi bien pour la transmission d'énergie que pour la transmission d'ordres de commande et, dans au moins une position relative associée, peut être couplé par induction (8, 9) à un récepteur (2) inséré dans le circuit de courant de commande (3) de la ou des valves magnétiques (4 - 4b), aussi bien pour alimenter en énergie électrique le circuit de courant de commande et les valves magnétiques que pour transmettre des ordres de commande.

2. Dispositif selon la revendication 1, caractérisé par le fait que le transmetteur (1) présente pour l'entrée d'ordres de commande, un dispositif (7) de codage et de modulation pour l'émetteur (5) et que le récepteur (2) présente un étage de décodage ou de démodulation, éventuellement intégré dans un étage (10) redresseur, et par le fait que l'étage (10) redresseur est connecté au circuit d'alimentation et que l'étage de décodage ou de démodulation fait partie d'un dispositif de commande (11, 12) de la valve magnétique ou de commande sélective de plusieurs valves magnétiques (4 - 4b).

3. Dispositif selon la revendication 1 ou la revendication 2, caractérisé par le fait qu'au moins un condensateur tampon (13) est monté dans le circuit d'alimentation du récepteur (2, 3), lequel condensateur tampon est chargé par le signal d'émission et, lors de la commande d'une vanne magnétique (4 - 4b), se décharge dans le circuit d'excitation de celle-ci.

4. Dispositif selon la revendication 3, caractérisé par le fait qu'il est prévu dans le circuit de commande pour le condensateur tampon (13) un circuit de surveillance (14) qui n'autorise la commande de valves (4 - 4b), dans le sens d'un actionnement de celles-ci, seulement lorsqu'un état de charge minimal prédéterminé du condensateur est atteint.

5. Dispositif selon l'une des revendications 1 à 4, caractérisé par le fait que pour la commande sélective de plusieurs valves magnétiques (4 - 4b), on associe à chaque valve, côté émetteur ,une fréquence de modulation prédéterminée pour le signal d'émission qui est différente des fréquences de modulation pour les autres valves et par le fait qu'il est prévu pour chaque valve, côté récepteur, un module (11 - 11b) sélectif en fréquence qui, lors de l'apparition de cette fréquence de modulation, ne commande que la valve concernée.

6. Dispositif selon l'une des revendications 1 à 5, caractérisé par le fait que, notamment lorsque les valves magnétiques (4 - 4b) sont montées sur un objet mobile, par exemple un wagon, et que le transmetteur (1) est fixe, on place sur l'objet mobile plusieurs récepteurs (2) qui peuvent être couplés par induction au transmetteur et sont branchés en parallèle dans le circuit de commande pour les valves.

7. Dispositif selon l'une des revendications 1 à 6, caractérisé par le fait que plusieurs transmetteurs branchés en parallèle sont disposés l'un derrière l'autre sur le trajet de déplacement de l'objet, de préférence sur une barre commune, et sont branchés en parallèle.

8. Dispositif selon l'une des revendications 1 à 7, caractérisé par le fait que, lorsque l'objet mobile est un wagon, le transmetteur (1) ou le groupe de transmetteurs est disposé entre les rails de la voie et est tourné vers le haut tandis que le récepteur ou les groupes de récepteurs sont montés sur la face inférieure du wagon en étant tournés vers le bas.

9. Dispositif selon l'une des revendications 1 à 8, caractérisé par le fait que le récepteur comporte un microprocesseur programmable qui commande les valves magnétiques et dont les programmes de commande peuvent être sélectionnés par l'intermédiaire de fréquences de modulation différentes du transmetteur (1).
